# EUROPEAN PATENT APPLICATION

(11) **EP 1 691 567 A1**
(43) Date of publication of application: **16.08.2006**
(21) Application number: 06002914.7
(22) Date of filing: 14.02.2006
(51) Int. Cl.: H04Q 7/38, H04M 15/00

(54) **Method of account selection in a roaming mobile terminal**

(30) Priority: 14.02.2005 EP 05003101
(71) Applicant: Sagem Orga GmbH, 33104 Paderborn (DE)
(72) Inventor: Jansen, Ben, 4851 CM Ulvenhout (NL)
(74) Representative: Hanewinkel, Lorenz

(57) **Abstract**

Method to use the lowest possible tariff for connections of subscribers with mobile terminals, who leave their home network and enter a foreign mobile network, comprising the steps:
- check the SEW-Card of the mobile terminal if a subscriber number for the foreign network is available
- if such a number is available, switch the mobile terminal to that number,
- inform the subscriber about his current subscriber number,
- use the mobile terminal in that network like a terminal, that is normally subscribed to that foreign network;
- if such a number is not available, switch the mobile terminal to a call back number of its home network,
- inform the subscriber about his call back account,
- use that call back number for roaming connections within the foreign network.

## Description

The invention is related to a method of providing, more or less automatic, the selection of a connection via a network at optimized Larif conditions, which are different according to time, line quality and traffic load.

"RoamHome" is a Global solution for changing Roaming calls into national calls in case of the availability of a "friendly" network. Incase this network is not avaliable the application will switch to a call back mode based on either the home network or a default roaming network.

The aim is, that high roaming tariffs, high GPRS ROAMING charges are avoided by using prefferred network switching based on changing IMSI. Local information services are reachable on local numbers everywhere. The solution is using this new method; a lot of services will become locally available. Also GPRS everywhere and lower cost calls are part of the package.

The method provides a most cost effective connection between a subscriber terminal and a selected terminal by an interactive mode while displaying on a local display of the subscriber each possible decisive step to be taken by the subscriber with preference of using a local account,
in a first case, if there is no local account available,
- display: availability of no local account,
- display: switch to call back account,
- display: new account is active,
   and in a second case, if a local account is available,
- display: name of local network,
- display: if wanted by the subscriber, switch for selection, after preparation of a global home account,
- display: global home account is active
   both cases finally initiate a message using a bearer service (SMS, USSD, GPRS etc.) with a new IMSI accordingly to be sent to the call routing backend at the hosting company.

Another method for providing a most cost effective connection between a subscriber terminal and a selected terminal by an automatic mode is the method with preference of using a local account
- if no local account is available, activating a call back account, and
- if a local account is available immidiately,
   in both cases taking network information and checking, if utilizing this, that a connection is successful established, reporting a status massage to the subscriber terminal, which displays connection type and type of account and releases a status tone.

The new method is able to work in at least two modes, which are a more or less delegated and an automatic mode. If the fully automatic mode is selected, the new method always will select the best solution for the customer, this means, to set up connections e. g. with the lowest cost at reasonable line quality. When the connection is entering a foreign country, the system provides 4 checks, if a local account is available on the smartcard of the subscriber and tries to logon to the regarded network. If there is no local account available, the application switches to a default call back account which can be the original HOME IMSI. Only after final logon to the new network, the user will be informed.

In the delegated mode, the user at his terminal will be asked and informed about every step from detecting a local account until successfully logging on to it.

In both modes it is necessary to switch by the new method means a call control via EF SST handling. For local account and default account: byte 7 of EF SST is to be set to FF, which means call control on.
For home account byte 7 of EF SST is to be set to 3F which means call control off.

The procedures are shown in the general overview of the System and in flowcharts.

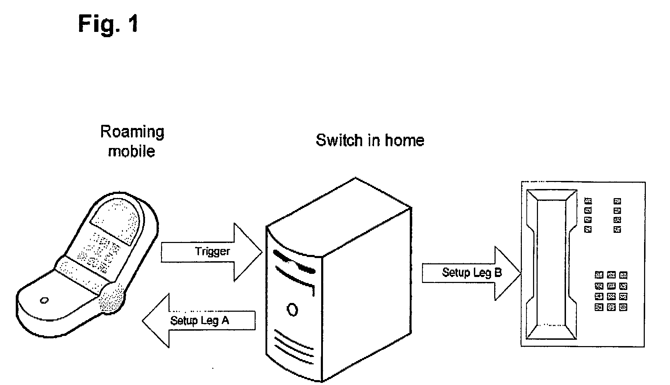

Figure 1 is showing a general system set up.

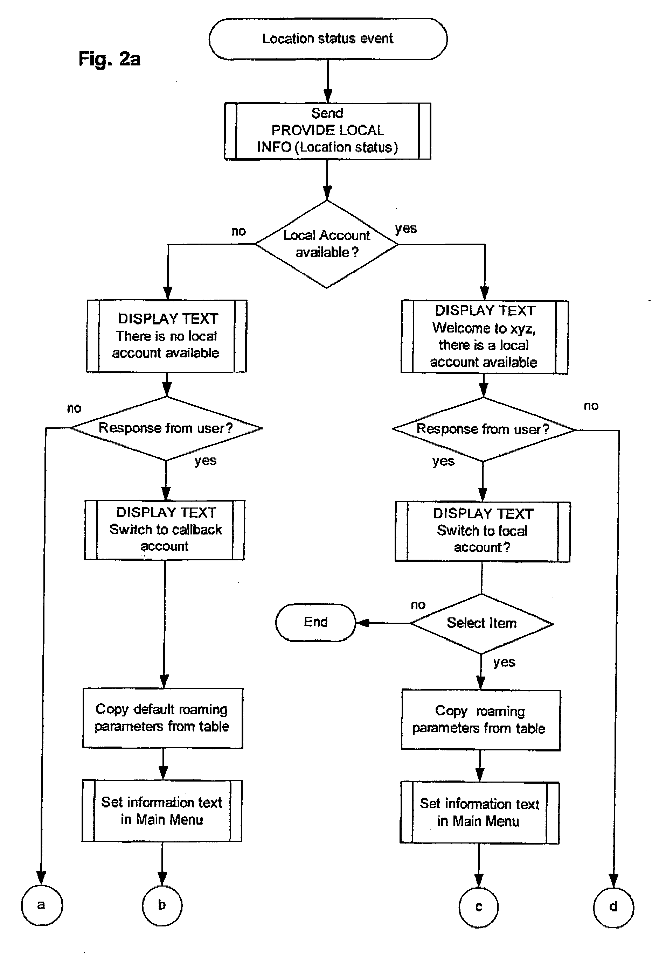

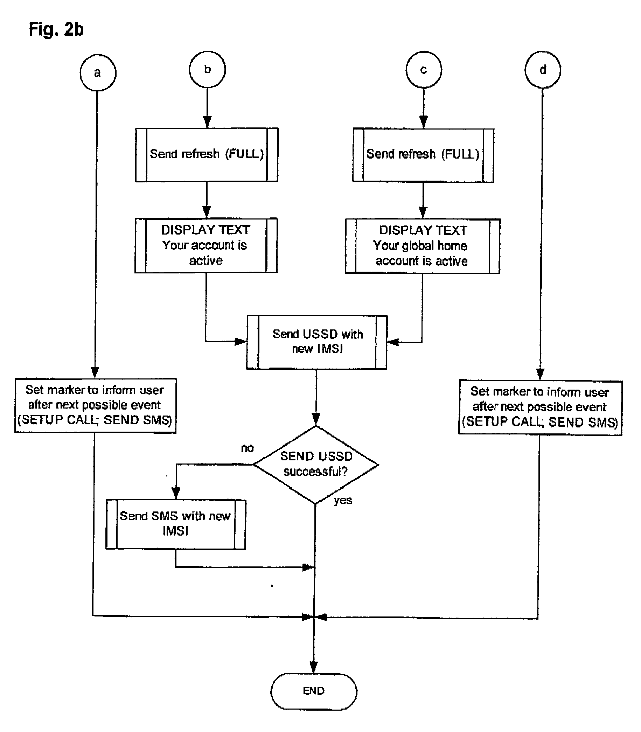

Figure 2a, 2b are connected by references (a - d) and are showing the operation of the delegated mode.

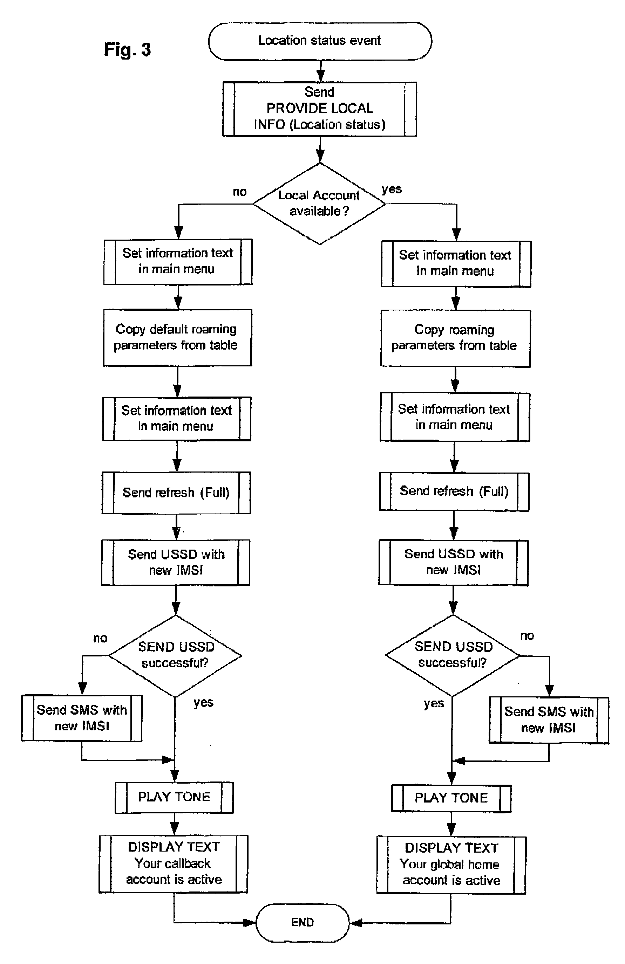

Figure 3 shows the operation of the fully automatic mode.

A list of the abbreviations is enclosed.

For example, if there is a company that would like to offer Gobal Home to subscribers according to the invention, the subscriber will, if possible automaticaily, logon to a local IMSI. If there is no local network available, no local IMSI, the subscriber will logon in Roaming Mode using SIM Controlled Calling, which is patented by Privacom, on the Home or default roaming network.

It is in the scope of the invention to combine to a certain extend the fully automatic mode with the delegated mode by handling only one or more decisive steps by the user and the others automatically. Advantageously there is an presolution step, e. g. in a set up mode, in which the degree of automatic operation is defined. Further the actual choice of the different tariffs and related quality data like bandtaith, traffic load and/or noise level, could be presented to the user on his display for taking his actual choice or alternativly will automatically be taken into account according to earlier given set up instructions.

Abbreviation list
- GSM: Global System for Mobile Commication
- SIM: Subscriber Indentification Module
- GPRS: General Packet Radio System
- IMSI: International Mobile Subscriber Identity
- USSD: Unstructured Supplementary Service Data
- EF SST: SIM Service Table

## Claims

1. Method for providing a most cost effective connection between a subscriber terminal and a selected terminal by an interactive mode, while displaying on a local display each possible decisive step to be taken by the subscriber with preference of using a local account,
in a first case, if there is no local account available,
- display: availability of no local account,
- display: switch to call back account,
- display: new account is active,
and in a second case, if a local account is available,
- display: name of local network,
- display: if wanted by the subscriber, switch for selection, after preparation of a global home account,
- display: global home account is active,
both cases finally initiate a message using a bearer service (SMS, USSD, GPRS etc.) with a new IMSI accordingly to be sent to the call routing backend at the hosting company.

2. Method for providing a most cost effective connection between a subscriber terminal and a selected terminal by an automatic mode, the method with preference of using a local account
- if no local account is available, activating a call back account, and
- if a local account is available immidiately,
in both cases taking network information and checking, if utilizing this, that a connection is successful established, reporting a status massage to the subscriber terminal, which displays connection type and type of account and releases a status tone.
